# EUROPEAN PATENT APPLICATION

(11) **EP 4 178 252 A1**
(43) Date of publication of application: **10.05.2023**
(21) Application number: 21868738.2
(22) Date of filing: 18.09.2021
(51) Int. Cl.: H04W 24/10, H04W 24/08, H04W 24/02, H04W 88/04, H04W 84/12

(54) **SL AND WLAN INTEROPERATION METHOD AND APPARATUS, AND COMMUNICATION DEVICE**

(30) Priority: 21.09.2020 CN 202010997401
(71) Applicant: Vivo Mobile Communication Co., Ltd., Dongguan, Guangdong 523863 (CN)
(72) Inventor: KIMBA DIT ADAMOU, Boubacar, Dongguan, Guangdong 523863 (CN); YANG, Xiaodong, Dongguan, Guangdong 523863 (CN)
(74) Representative: Winter, Brandl - Partnerschaft mbB
(86) International application number: PCT/CN2021/119280
(87) International publication number: WO 2022/057916

(57) **Abstract**

This application discloses an SL and WLAN interworking method and apparatus and a communication device, belonging to the field of wireless communications technologies. The SL and WLAN interworking method includes: receiving a WLAN measurement report reported by a remote terminal in a sidelink; and transmitting SL and WLAN interworking configuration information in a case that the WLAN measurement report indicates that an SL and WLAN interworking condition is met.

## Description

### CROSS-REFERENCE TO RELATED APPLICATIONS

This application claims priority to Chinese Patent Application No. 202010997401.4 filed in China on September 21, 2020, which is incorporated herein by reference in its entirety.

### TECHNICAL FIELD

This application relates to the field of wireless communications technologies, and specifically, to an SL and WLAN interworking method and apparatus and a communication device.

### BACKGROUND

In the related art, a Uu interface between a network-side device and terminal user equipment (User Equipment, LTE, may also be referred to as a terminal for short) may support interworking with a wireless local area network (Wireless Local Area Network, WLAN), but a sidelink (Sidelink, SL) interface does not support interworking with the WLAN.

Because a WLAN interface uses an unlicensed frequency spectrum, and a bandwidth is shared, the cost is relatively low or there is no cost. In addition, it is standard for LTE to be equipped with the WLAN interface, and there is no additional hardware cost. If an SL interface between UEs supports interworking with the WLAN, the transmission rate between the UEs will be greatly improved. In addition, paths for different services may be configured according to service features, and a user experience is improved based on ensuring QoS.

However, currently, interworking between an SL and the WLAN is not supported.

### SUMMARY

An objective of embodiments of this application is to provide an SL and WLAN interworking method and apparatus and a communication device, which may resolve a problem that currently interworking between an SL and a WLAN is not supported.

To resolve the foregoing technical problems, this application is implemented as follows:
According to a first aspect, an SL and WLAN interworking method is provided, applied to a terminal, and the method including:
performing, in a case that a WLAN measurement condition is met, WLAN measurement according to WLAN measurement configuration information to obtain a WLAN measurement report; and
reporting the WLAN measurement report to a base station and/or a relay terminal.

According to a second aspect, an SL and WLAN interworking method is provided, applied to a communication device, and the method including:
receiving a WLAN measurement report reported by a remote terminal in a sidelink; and
transmitting SL and WLAN interworking configuration information in a case that the WLAN measurement report indicates that an SL and WLAN interworking condition is met.

According to a third aspect, an SL and WLAN interworking apparatus is provided, including:
a measurement module, configured to perform WLAN measurement according to WLAN measurement configuration information to obtain a WLAN measurement report in a case that a WLAN measurement condition is met; and
a reporting module, configured to report the WLAN measurement report to a base station and/or a relay terminal.

According to a fourth aspect, an SL and WLAN interworking apparatus is provided, including:
a receiving module, configured to receive a WLAN measurement report reported by a remote terminal in a sidelink; and
a first transmitting module, configured to transmit SL and WLAN interworking configuration information in a case that the WLAN measurement report indicates that an SL and WLAN interworking condition is met.

According to a fifth aspect, a terminal is provided, including a processor, a memory, and a program or an instruction stored in the memory and executable on the processor, where the program or instruction, when executed by the processor, implements the steps of the method according to the first aspect.

According to a sixth aspect, a communication device is provided, including a processor, a memory, and a program or an instruction stored in the memory and executable on the processor, where the program or instruction, when executed by the processor, implements the steps of the method according to the second aspect.

According to a seventh aspect, a readable storage medium is provided, storing a program or an instruction, where the program or instruction, when executed by a processor, implements the steps of the method according to the first aspect, or implements the steps of the method according to the second aspect.

According to an eighth aspect, a chip is provided, including a processor and a communication interface, where the communication interface is coupled to the processor, and the processor is configured to run a program or an instruction on a network-side device to implement the method according to the first aspect, or implement the method according to the second aspect.

According to a ninth aspect, a program product is provided, being stored in a non-volatile storage medium, where the program product, when executed by at least one processor, implements the method according to the first aspect, or implements the method according to the second aspect.

In this embodiment of this application, the remote terminal in the sidelink may perform the WLAN measurement and transmit to the base station and/or relay terminal when the WLAN measurement condition is met, which may cause the relay terminal and remote terminal in the sidelink to better perform an interworking transmission operation by using unlicensed spectrum WLAN and SL. In this way, the service rate of the user is improved, QoS of a UE service is ensured, and system efficiency and utilization of a network spectrum are ensured while improving the user experience.

### BRIEF DESCRIPTION OF THE DRAWINGS

FIG. 1 is a block diagram of a wireless communication system to which an embodiment of this application may be applied;
FIG. 2 is a schematic diagram of a user plane protocol stack of a sidelink interface in the related art;
FIG. 3 is a schematic diagram of a control plane protocol stack of a sidelink interface in the related art;
FIG. 4 is a schematic diagram of an SL and WLAN interworking scenario according to an embodiment of this application;
FIG. 5 is a schematic diagram of an SL and WLAN interworking scenario according to another embodiment of this application;
FIG. 6 is a schematic flowchart of an SL and WLAN interworking method according to an embodiment of this application;
FIG. 7 is a schematic flowchart of an SL and WLAN interworking method according to another embodiment of this application;
FIG. 8 is a schematic flowchart of an SL and WLAN interworking method according to yet another embodiment of this application;
FIG. 9 is a schematic flowchart of an SL and WLAN interworking method according to still another embodiment of this application;
FIG. 10 is a schematic structural diagram of an SL and WLAN interworking apparatus according to an embodiment of this application;
FIG. 11 is a schematic structural diagram of an SL and WLAN interworking apparatus according to another embodiment of this application;
FIG. 12 is a schematic structural diagram of a communication device according to an embodiment of this application;
FIG. 13 is a schematic diagram of a hardware structure of a terminal according to an embodiment of this application; and
FIG. 14 is a schematic diagram of a hardware structure of a base station according to an embodiment of this application.

### DETAILED DESCRIPTION

The technical solutions in the embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

It should be noted that, the technology described in this embodiment of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in this embodiment of this application are often used interchangeably, and the described technologies may be used both for the systems and radio technologies mentioned above and may also be used for other systems and radio technologies. However, the following descriptions describe a new radio (New Radio, NR) system for the objective of being used as an example, and NR terms are used in most of the descriptions below. These technologies may also be applied to applications other than NR system applications, such as a 6^{th} generation (6^{th} Generation, 6G) communication system.

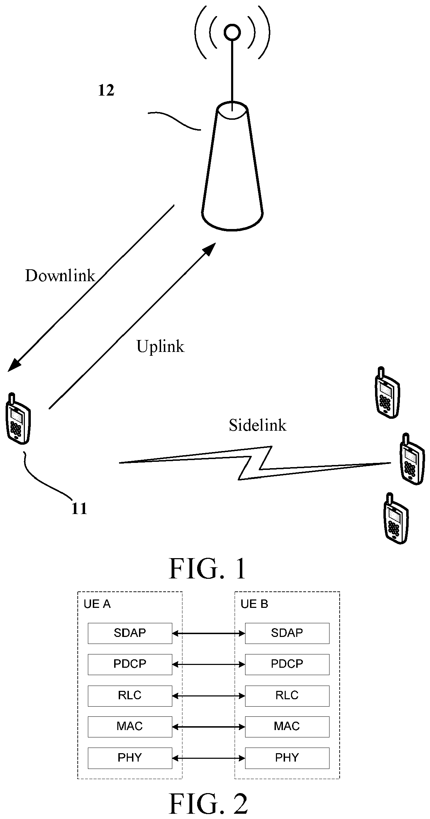

FIG. 1 is a block diagram of a wireless communication system to which an embodiment of this application may be applied. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (VUE), and pedestrian user equipment, (PUE). The wearable device includes: a bracelet, headphones, glasses, or the like. It is to be noted that, in this embodiment of this application, a specific type of the terminal 11 is not limited. The network-side device 12 may be a base station or a core network, where the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a household node B, a household evolved node B, a WLAN access point, a WiFi node, a transmission reception point (Transmission Reception Point, TRP) or some other proper terms in the field. Provided that the same technical effect is achieved, the base station is not limited to a specific technical vocabulary. It should be noted that, in this embodiment of this application, only a base station in the NR system is used as an example, but a specific type of the base station is not limited.

Communication terms related to this application are first introduced below.

### 1. Sidelink introduction

Long Term Evolution (Long Term Evolution, LTE) systems start to support sidelink (sidelink) from the 12^{th} release version, which is used for direct data transmission between terminal user equipment (User Equipment, UE, also referred to as a terminal) without a network-side device.

The design of LTE sidelink is suitable for specific public security affairs (such as emergency communication in places where a disaster such as fire or earthquake occurs), or vehicle to everything (vehicle to everything, V2X) communication. The V2X communication includes various services, such as basic security communication, advanced (autonomous) driving, formation, and sensor expansion. Because the LTE sidelink only supports broadcast communication, the LTE sidelink is mainly used for basic security communication, and other advanced V2X services with a strict quality of service (Quality of Service, QoS) requirement in terms of latency and reliability are supported by using a new radio (New Radio, NR) sidelink.

A 5G NR system may be used in an operating band above 6 GHz that is not supported by the LTE, and supports a greater operating bandwidth. However, the current version of NR system only supports an interface between a base station and a terminal, and does not support a sidelink interface for direct communication between terminals. A sidelink interface may also be referred to as a PC5 interface.

### 2. A transmission form of a sidelink

The current sidelink transmission is also mainly divided into transmission forms such as broadcast (broadcast), groupcast (groupcast), and unicast (unicast). As the name suggests, the unicast is one-to-one (one to one) transmission. The groupcast is one-to-many (one to many) transmission. The broadcast is also one-to-many transmission, but in the broadcast, there is not a concept that UE belongs to the same group.

Currently, sidelink unicast communication and groupcast communication support a physical layer hybrid automatic repeat request (Hybrid Automatic Repeat Request, HARQ) feedback mechanism.

### 3. Resource allocation mode 1 and mode 2

Resource allocation modes of sidelink UE are divided into two categories:
1) Base station scheduling mode (Mode 1): controlled by a base station and allocating resources to each UE.
2) UE autonomous mode (Mode 2): each UE independently selects resources.

### 4. SL protocol stack

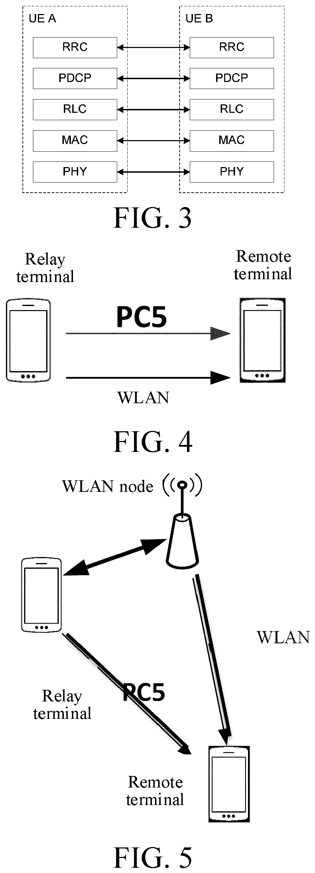

A conventional sidelink (SL) interface is provided. As shown in FIG. 2, a user plane (User Plane, UP) protocol stack between two UEs from a bottom layer to a higher layer includes: a physical layer (physical layer, PHY), media access control (Media Access Control, MAC), radio link control (Radio Link Control, RLC), a packet data convergence protocol (Packet Data Convergence Protocol, PDCP), and a service data adaption protocol (Service Data Adaption Protocol, SDAP). As shown in FIG. 3, a control plane (Control Plane, CP) protocol stack from a bottom layer to a higher layer includes: a PHY, MAC, RLC, a PDCP, and Radio Resource Control (Radio Resource Control, RRC) (PC5-S).

Currently, the SL does not support interworking with the WLAN, and therefore, there is no related protocol stack or/and interface between the WLAN and an SL node.

The SL and WLAN interworking method and apparatus and the communication device provided in this embodiment of this application is described in detail below by using specific embodiments and application scenarios thereof with reference to the accompanying drawings.

Referring to FIG. 4 and FIG. 5, this embodiment of this application relates to two SL and WLAN interworking scenarios.

One is that the relay terminal in the sidelink is simultaneously served as the SL node and WLAN node.

The other is that the relay terminal is served as the SL node, and is set independently from the WLAN node. For example, the WLAN node may be a 5G residential gateway (5G-RG). For example, the WLAN may use a WiFi connection manner.

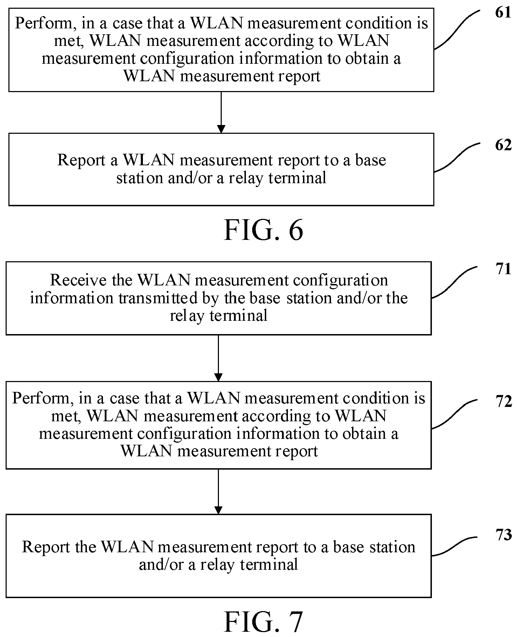

FIG. 6 is a schematic flowchart of an SL and WLAN interworking method according to an embodiment of this application. The method is applied to a remote terminal in a sidelink, including:
step 61: perform WLAN measurement according to WLAN measurement configuration information to obtain a WLAN measurement report in a case that a WLAN measurement condition is met; and
step 62: report the WLAN measurement report to a base station and/or a relay terminal.

In this embodiment of this application, the remote terminal in the sidelink may perform WLAN measurement and transmit to the base station and/or relay terminal when the WLAN measurement condition is met, which may cause the relay terminal and remote terminal in the sidelink to better perform an interworking transmission operation by using unlicensed spectrum WLAN and SL. In this way, the service rate of the user is improved, quality of service (Quality of Service, QoS) of a UE service is ensured, and system efficiency and utilization of a network spectrum are ensured while improving the user experience.

In this embodiment of this application, optionally, the WLAN measurement condition includes at least one of the following:
1) signal quality of a Uu interface between the remote terminal and the the base station is less than or equal to a first threshold; and
   optionally, the first threshold is configured by the base station or the remote terminal.

The base station may be configured in a manner of broadcast or dedicated signaling.
2) Signal quality of a PC5 interface between the remote terminal and the the relay terminal is less than or equal to a second threshold; and
optionally, the second threshold is configured by the base station, the relay terminal, or the remote terminal.

The relay terminal configures the second threshold through the PC5 interface, and may configure in a manner of unicast, groupcast, or broadcast.
3) The remote terminal is located at a first preset location; and
optionally, the first preset location is configured by the base station, the relay terminal, or the remote terminal.
4) The base station instructs the remote terminal to start the WLAN measurement.
5) The base station instructs the remote terminal to start the WLAN measurement through the relay terminal.
6) The relay terminal instructs the remote terminal to start the WLAN measurement.

FIG. 7 is a schematic flowchart of an SL and WLAN interworking method according to an embodiment of this application. The method is applied to a remote terminal in a sidelink, including:
step 71: receive the WLAN measurement configuration information transmitted by the base station and/or the relay terminal;
step 72: perform WLAN measurement according to WLAN measurement configuration information to obtain a WLAN measurement report in a case that a WLAN measurement condition is met; and
step 73: report the WLAN measurement report to the base station and/or the relay terminal;
optionally, the WLAN measurement configuration information includes at least one of the following:
   WLAN measurement configuration parameters; or
   WLAN measurement reporting parameters.

Optionally, the WLAN measurement configuration parameters include at least one of the following:
1) a WLAN band indicator list (bandIndicatorListWLAN ), including a WLAN band list. A value band 2 dot 4 indicates a 2.4 GHz band, a value band 5 indicates a 5 GHz band, and a value band 60 indicates a 60 GHz band.
2) A WLAN carrier information list (carrierInfoListWLAN ) includes a WLAN carrier information list of a measurement object;
3) a WLAN identifier list that needs to be added to a measurement configuration (wlan-ToAddModList);
4) a WLAN identifier list that needs to be removed from a measurement configuration (wlan-ToRemoveList);
5) whether a measurement report includes a WLAN available admission capacity (availableAdmissionCapacityRequestWLAN); a value true indicates that LTE should include a WLAN available admission capacity (if available) in a measurement report;
6) whether a measurement report includes a WLAN backhaul uplink and/or downlink bandwidth; a WLAN backhaul UL-bandwidth request, and a WLAN backhaul DL-bandwidth request; a value true indicates that UE should include a WLAN backhaul uplink and/or downlink bandwidth (if available) in a measurement report;
7) whether a measurement report includes a WLAN band (bandRequestWLAN); a value true indicates that LTE should include a WLAN band in a measurement report;
8) whether a measurement report includes WLAN carrier information (carrierInfoRequestWLAN); a value true indicates that UE should include WLAN carrier information (if available) in a measurement report;
9) whether a measurement report includes WLAN channel utilization (channelUtilizationRequest-WLAN); a value true indicates that UE should include WLAN channel utilization (if available) in a measurement report;
10) an event ID (eventId) that triggers the WLAN measurement; or a maximum number of cells (excluding serving cells) to be included in a measurement report. If an objective ReportStrongTestCellsForSON is set to be applied by only a value 1, an inter-RAT WLAN is a maximum number of WLANs to be included in a measurement report.
11) A maximum number of cells (maxReportCells) in a measurement report;
12) a configuration of a measurement report (measRSSI-ReportConfigNR) of a WLAN received signal strength indication (RSSI); if the field exists, LTE should perform a measurement report of a received signal strength indication (Received Signal Strength Indication, RSSI) and channel occupancy;
13) reporting any WLAN access point (reportAnyWLAN) that meets an interworking trigger request; indicating that UE reports any WLAN access point that meets a trigger request;
14) WLAN carrier information (WLAN-CarrierInfo);
15) a WLAN channel number (Channel Number);
16) a WLAN country code (Country Code);
17) a WLAN operating class (Operating Class);
18) a WLAN name (WLAN-Name); if configured, UE only performs the WLAN measurement based on an identified name; each name refers to a service set identifier (SSID) as defined in a protocol; or
19) an event that triggers the WLAN measurement.

For example,
event W1: a WLAN becomes better than a threshold;
event W2: all WLANs in a WLAN mobility set become worse than a threshold 1, and WLANs outside the WLAN mobility set become better than a threshold 2; and
event W3: all WLANs in the WLAN mobility set become worse than the threshold.

Optionally, the WLAN measurement reporting parameters include at least one of the following:
1) a WLAN available admission capacity (availableAdmissionCapacityWLAN);
2) a WLAN backhaul downlink bandwidth (backhaulDL-BandwidthWLAN); the WLAN backhaul available downlink bandwidth is equal to a downlink rate multiplied by a downlink load defined in Wi-Fi alliance hotspot 2.0;
3) a WLAN backhaul uplink bandwidth (backhaulLTL-BandwidthWLAN WLAN); the WLAN backhaul available uplink bandwidth is equal to an uplink rate multiplied by an uplink load defined in Wi-Fi alliance hotspot 2.0;
4) WLAN carrier information (carrierInfoWLAN);
5) WLAN channel occupancy information (channelOccupancy); indicating a percentage of samples when the RSSI is greater than a configured channel occupancy threshold;
6) WLAN channel utilization (channelUtilizationWLAN);
7) indication information used for indicating whether the remote terminal is connected to a WLAN to which a measurement result is applicable (connectedWLAN);
8) a WLAN measurement result list (measResultListWLAN); a WLAN mobility set of a WLAN measurement identifier and a maximum number of measurement result lists for the best WLAN reported in addition to the connected WLAN (if any);
9) a WLAN RSSI measurement result (rssiWLAN); measuring a WLAN RSSI result by using dBm as a unit;
10) a total number of stations associated with a WLAN (stationCountWLAN); indicating a total number of stations currently associated with the WLAN as defined in a protocol;
11) a WLAN identifier (wlan-Identifiers); indicating WLAN parameters used for identifying a WLAN to which a measurement result is applicable; or

WLAN round trip time RTT information.

Optionally, the WLAN round trip time RTT information includes at least one of the following:
rttValue: the field specifies a round trip time (RTT) measurement value between a target device and a WLAN access point, and a unit is specified by a field rttUnits;
rttUnits: the field specifies units for fields rttValue and rttAccuracy. Available units are 1000 ns, 100 ns, 10 ns, 1 ns, and 0.1 ns; or
rttAccuracy: an estimated accuracy of the rttValue provided by the field is expressed in a unit given by the field rttUnits.

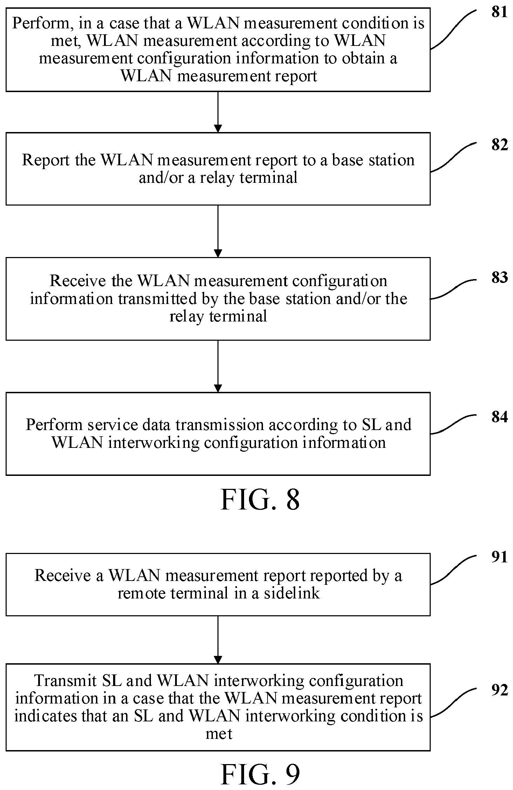

FIG. 8 is a schematic flowchart of an SL and WLAN interworking method according to an embodiment of this application. The method is applied to a remote terminal in a sidelink, including:
step 81: perform WLAN measurement according to WLAN measurement configuration information to obtain a WLAN measurement report in a case that a WLAN measurement condition is met; and
step 82: report the WLAN measurement report to a base station and/or a relay terminal;
step 83: receive SL and WLAN interworking configuration information transmitted by the base station and/or the relay terminal; and
step 84: perform service data transmission according to the SL and WLAN interworking configuration information.

Optionally, the SL and WLAN interworking configuration information includes at least one of SL and WLAN interworking configuration information configured by the base station or SL and WLAN interworking configuration information configured by the relay terminal.

Optionally, the SL and WLAN interworking configuration information configured by the base station includes at least one of the following:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

Optionally, the SL and WLAN interworking configuration information configured by the relay terminal includes at least one of the following:
configuration information of a WLAN data radio bearer;
configuration information of a QoS flow mapped to a WLAN data radio bearer; or
configuration information of a WLAN offloading or replication duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

FIG. 9 is a schematic flowchart of an SL and WLAN interworking method according to an embodiment of this application. The method is applied to a communication device, including:
step 91: receive a WLAN measurement report reported by a remote terminal in a sidelink; and
step 92: transmit SL and WLAN interworking configuration information in a case that the WLAN measurement report indicates that an SL and WLAN interworking condition is met.

In this embodiment of this application, the communication device receives the WLAN measurement report reported by the remote terminal in the sidelink. If the WLAN measurement report indicates that an SL and WLAN interworking condition is met, SL and WLAN interworking configuration information is transmitted, which may cause the relay terminal and remote terminal in the sidelink to better perform an interworking transmission operation by using unlicensed spectrum WLAN and SL. In this way, the service rate of the user is improved, QoS of a LTE service is ensured, and system efficiency and utilization of a network spectrum are ensured while improving the user experience.

The communication device may be a base station or a relay terminal.

In some embodiments of this application, optionally, the communication device is a base station; and the receiving a WLAN measurement report reported by a remote terminal in a sidelink includes at least one of the following:
1) receiving the WLAN measurement report reported by the remote terminal through a Uu interface; or
2) receiving the WLAN measurement report reported by the remote terminal through a relay terminal.

In this case, the remote terminal transmits the WLAN measurement report to the relay terminal through the PC5 interface, and the relay terminal forwards the WLAN measurement report to the base station through the Uu interface.

In some embodiments of this application, optionally, the communication device is a base station; and the transmitting SL and WLAN interworking configuration information includes at least one of the following:
1) transmitting the SL and WLAN interworking configuration information to a relay terminal and/or the remote terminal; and
   when transmitting to the relay terminal, the base station transmits the SL and WLAN interworking configuration information to the relay terminal through the Uu interface.

When transmitting to the remote terminal, the base station transmits the SL and WLAN interworking configuration information to the remote terminal through the Uu interface. Alternatively, the base station transmits the SL and WLAN interworking configuration information to the relay terminal through a Uu interface, and the relay terminal forwards the SL and WLAN interworking configuration information to the remote terminal through a PC5 interface.

Transmission in the 1) is performed by dedicated signaling.
2) Transmit the SL and WLAN interworking configuration information through broadcast.

Optionally, the SL and WLAN interworking configuration information includes:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

In this embodiment of this application, optionally, the SL and WLAN interworking configuration information transmitted to the relay terminal further includes:
node interactive parameters of an SL node and a WLAN node.
optionally, the node interactive parameters of the SL node and the WLAN node include at least one of the following:
   1) a basic service set identifier (Basic Service Set Identifier, BSSID);
   2) a WLAN operating class (WLAN Operating Class);
   3) a WLAN country code (WLAN Country Code);
   4) a WLAN maximum admission capacity (Maximum Capacity);
   5) WLAN band information (WLAN Band Information);
   6) a WLAN channel number (WLAN Channel Number); indicating a WLAN channel number defined in a protocol;
   7) a service set identifier (Service Set Identifier, SSID);
   8) an extended service set identifier (Extended Service Set Identifier, ESSID);
   9) WLAN usage (WLAN Usage); or
wide area network (Wide Area Network, WAN) indicator information.

Optionally, the WAN indicator information includes at least one of the following:
WAN downlink backhaul rate (WAN Backhaul Rate DL): a downlink rate field of a WAN indicator element;
WAN uplink backhaul rate (WAN Backhaul Rate LTL): an uplink rate field of a WAN measurement element;
WAN downlink backhaul load (WAN Backhaul Load DL): a downlink load field of a WAN measurement element; or
WAN downlink and uplink backhaul load (WAN Backhaul Load UL): an uplink load field of a WAN measurement element.

11) WLAN channel utilization (Channel Utilization): indicating a utilization level of a channel; or
12) terminal identity information (UE Identity): corresponding to a WLAN MAC address of UE.

In some embodiments of this application, optionally, the communication device is a relay terminal, and the SL and WLAN interworking configuration information includes at least one of the following:
configuration information of a WLAN data radio bearer;
configuration information of a QoS flow mapped to a WLAN data radio bearer; or
configuration information of a WLAN offloading or duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

In some embodiments of this application, optionally, the communication device is a base station; and the method further includes at least one of the following:
transferring an entire or partial service of a relay terminal from a Uu link to a WLAN link;
instructing a relay terminal to transfer an entire or partial service from a Uu link to a WLAN link;
releasing a Uu link with a relay terminal; or
transmitting a request for establishing a Uu and WLAN dual connectivity for a relay terminal to a WLAN node.

In some embodiments of this application, optionally, the communication device is a relay terminal, and the method further includes at least one of the following:
instructing a base station to transfer an entire or partial service of the relay terminal from a Uu link to a WLAN link;
transferring an entire or partial service of the remote terminal from a PC5 link to a WLAN link;
instructing the remote terminal to transfer an entire or partial service from a PC5 link to a WLAN link;
releasing a PC5 link with the remote terminal; or
transmitting a request for establishing an SL and WLAN dual connectivity for the remote terminal to a WLAN node.

In this embodiment of this application, optionally, before the receiving a WLAN measurement report reported by a remote terminal in a sidelink, the method further includes: transmitting WLAN measurement configuration information to the remote terminal.

Optionally, the WLAN measurement configuration information includes at least one of the following:
WLAN measurement configuration parameters; or
WLAN measurement reporting parameters.

Optionally, the WLAN measurement configuration parameters include at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report includes a WLAN available admission capacity;
whether a measurement report includes a WLAN backhaul uplink and/or downlink bandwidth;
whether a measurement report includes a WLAN band;
whether a measurement report includes WLAN carrier information;
whether a measurement report includes WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

Optionally, the WLAN measurement reporting parameters include at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization; or
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

In this embodiment of this application, optionally, the SL and WLAN interworking method further includes at least one of the following:
instructing the remote terminal to start WLAN measurement;
configuring a first threshold for the remote terminal, where a first threshold is used by the remote terminal to determine whether signal quality of a Uu interface meets a WLAN measurement condition;
configuring a first preset location for the remote terminal, where the first preset location is used by the remote terminal to determine whether a location at which the remote terminal is located meets a WLAN measurement condition; or
configuring a second threshold for the remote terminal, where the second threshold is used by the remote terminal to determine whether signal quality of a PC5 interface meets a WLAN measurement condition.

In some embodiments of this application, optionally, the communication device is a relay terminal; and the instructing the remote terminal to start WLAN measurement includes:
instructing the remote terminal to start the WLAN measurement in a case that the signal quality of the PC5 interface with the remote terminal is less than or equal to a third threshold, and/or the relay terminal is located at a second preset location.

Optionally, the third threshold may be broadcast by the base station, configured by the dedicated signaling, or configured by the relay terminal.

Optionally, the second preset location may be broadcast by the base station, configured by the dedicated signaling, or configured by the relay terminal.

In the embodiments of this application, using a 5G system as an example, the SL and WLAN interworking method may be extended to other communication systems.

In the embodiments of this application, the WLAN may use a wifi interface, and may also use, for example, other Bluetooth interfaces.

It is to be noted that, in the SL and WLAN interworking method provided in this embodiment of this application, an execution entity may be an SL and WLAN interworking apparatus, or a control module configured to perform the SL and WLAN interworking method in the SL and WLAN interworking apparatus. In this embodiment of this application, the SL and WLAN interworking apparatus performing the SL and WLAN interworking method is used as an example to describe an apparatus of the SL and WLAN interworking method provided in this embodiment of this application.

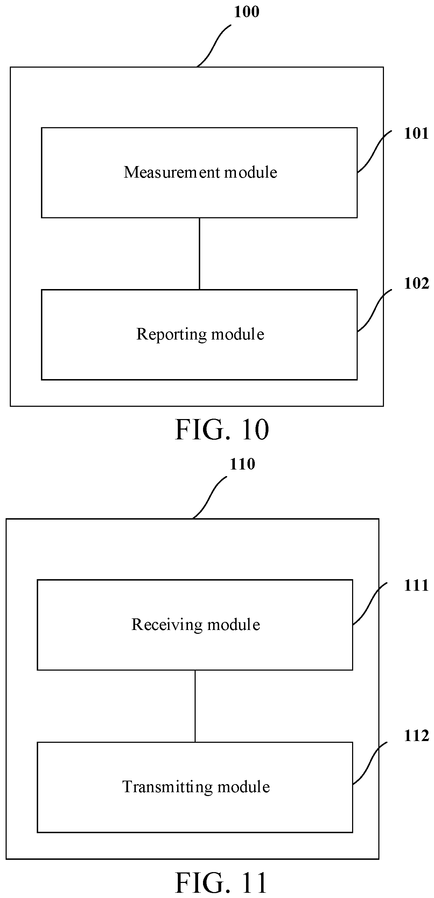

Referring to FIG. 10, an embodiment of this application provides an SL and WLAN interworking apparatus 100, including:
a measurement module 101, configured to perform WLAN measurement according to WLAN measurement configuration information to obtain a WLAN measurement report in a case that a WLAN measurement condition is met; and
a reporting module 102, configured to report the WLAN measurement report to a base station and/or a relay terminal.

Optionally, the WLAN measurement condition includes at least one of the following:
signal quality of a Uu interface between the remote terminal and the the base station is less than or equal to a first threshold;
signal quality of a PC5 interface between the remote terminal and the the relay terminal is less than or equal to a second threshold;
the remote terminal is located at a first preset location;
the base station instructs the remote terminal to start the WLAN measurement;
the base station instructs the remote terminal to start the WLAN measurement through the relay terminal; or
the relay terminal instructs the remote terminal to start the WLAN measurement.

Optionally, the first threshold is configured by the base station or the remote terminal.

Optionally, the second threshold is configured by the base station, the relay terminal, or the remote terminal.

Optionally, the first preset location is configured by the base station, the relay terminal, or the remote terminal.

Optionally, the SL and WLAN interworking apparatus 100 further includes:
a first receiving module, configured to receive the WLAN measurement configuration information transmitted by the base station or the relay terminal.

Optionally, the WLAN measurement configuration information includes at least one of the following:
WLAN measurement configuration parameters; or
WLAN measurement reporting parameters.

Optionally, the WLAN measurement configuration parameters include at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report includes a WLAN available admission capacity;
whether a measurement report includes a WLAN backhaul uplink and/or downlink bandwidth;
whether a measurement report includes a WLAN band;
whether a measurement report includes WLAN carrier information;
whether a measurement report includes WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

Optionally, the WLAN measurement reporting parameters include at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization; or
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

Optionally, the SL and WLAN interworking apparatus 100 further includes:
a second receiving module, configured to receive SL and WLAN interworking configuration information transmitted by the base station and/or the relay terminal; and
a transmission module, configured to perform service data transmission according to the SL and WLAN interworking configuration information.

Optionally, the SL and WLAN interworking configuration information includes at least one of SL and WLAN interworking configuration information configured by the base station or SL and WLAN interworking configuration information configured by the relay terminal.

Optionally, the SL and WLAN interworking configuration information configured by the base station includes at least one of the following:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

Optionally, the SL and WLAN interworking configuration information configured by the relay terminal includes at least one of the following:
configuration information of a WLAN data radio bearer;
configuration information of a QoS flow mapped to a WLAN data radio bearer; or
configuration information of a WLAN offloading or replication duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

The SL and WLAN interworking apparatus in this embodiment of this application may be an apparatus, and may also be a component in a terminal, an integrated circuit, or a chip. The apparatus may be a mobile terminal, or may be a non-mobile terminal. For example, the mobile terminal may include, but is not limited to, a type of the terminal 11 listed above, and a non-mobile terminal may be a server, a network attached storage (Network Attached Storage, NAS), a personal computer (personal computer, PC), a television (television, TV), a cash machine, a self-service machine, or the like, which is not specifically limited in this embodiment of this application.

The SL and WLAN interworking apparatus in this embodiment of this application may be an apparatus having an operating system. The operating system may be an Android (Android) operating system, may be an ios operating system, and may further be another possible operating system, which is not specifically limited in this embodiment of this application.

The SL and WLAN interworking apparatus provided in this embodiment of this application may implement various processes of the method embodiments in FIG. 6 to FIG. 8, and implement the same technical effect, which will not be described in detail herein again to avoid repetition.

Referring to FIG. 11, an embodiment of this application provides an SL and WLAN interworking apparatus 110, including:
a receiving module 111, configured to receive a WLAN measurement report reported by a remote terminal in a sidelink; and
a first transmitting module 112, configured to transmit SL and WLAN interworking configuration information in a case that the WLAN measurement report indicates that an SL and WLAN interworking condition is met.

In some embodiments of this application, the SL and WLAN interworking apparatus is a base station;
a receiving module 111 is configured to receive the WLAN measurement report reported by the remote terminal through a Uu interface;
   or
a receiving module 111 is configured to receive the WLAN measurement report reported by the remote terminal through a relay terminal.

In some embodiments of this application, the SL and WLAN interworking apparatus is a base station;
a first transmitting module 112 is configured to transmit the SL and WLAN interworking configuration information to a relay terminal and/or the remote terminal;
   or
a first transmitting module 112 is configured to transmit the SL and WLAN interworking configuration information through broadcast.

The first transmitting module 112 is configured to transmit the SL and WLAN interworking configuration information to the relay terminal through a Uu interface, and forward, by the relay terminal, the SL and WLAN interworking configuration information to the remote terminal through a PC5 interface.

Optionally, the SL and WLAN interworking configuration information includes:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

Optionally, the SL and WLAN interworking configuration information transmitted to the relay terminal further includes:
node interactive parameters of an SL node and a WLAN node.

Optionally, the node interactive parameters of the SL node and the WLAN node include at least one of the following:
a BSSID;
a WLAN operating class;
a WLAN country code;
a WLAN maximum admission capacity;
WLAN band information;
a WLAN channel number;
an SSID;
an HESSID;
WLAN usage;
WAN indicator information;
WLAN channel utilization; or
terminal identity information.

In some embodiments of this application, the SL and WLAN interworking apparatus is a base station; and the SL and WLAN interworking apparatus further includes at least one of the following:
a first transfer module, configured to transfer an entire or partial service of a relay terminal from a Uu link to a WLAN link;
a first indication module, configured to instruct a relay terminal to transfer an entire or partial service from a Uu link to a WLAN link;
a first release module, configured to release a Uu link with a relay terminal; or
a second transmitting module, configured to transmit a request for establishing a Uu and WLAN dual connectivity for a relay terminal to a WLAN node.

In some embodiments of this application, optionally, the SL and WLAN interworking apparatus is a relay terminal, and the SL and WLAN interworking configuration information includes at least one of the following:
configuration information of a WLAN data radio bearer;
configuration information of a QoS flow mapped to a WLAN data radio bearer; or
configuration information of a WLAN offloading or duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

In some embodiments of this application, the SL and WLAN interworking apparatus is a relay terminal, and the SL and WLAN interworking apparatus further includes at least one of the following:
a second indication module, configured to instruct a base station to transfer an entire or partial service of the relay terminal from a Uu link to a WLAN link;
a second transfer module, configured to transfer an entire or partial service of the remote terminal from a PC5 link to a WLAN link;
a third indication module, configured to instruct the remote terminal to transfer an entire or partial service from a PC5 link to a WLAN link;
a second release module, configured to release a PC5 link with the remote terminal; or
a third transmitting module, configured to transmit a request for establishing an SL and WLAN dual connectivity for the remote terminal to a WLAN node.

Optionally, the SL and WLAN interworking apparatus further includes:
a fourth transmitting module, configured to transmit WLAN measurement configuration information to the remote terminal.

Optionally, the WLAN measurement configuration information includes at least one of the following:
WLAN measurement configuration parameters; or
WLAN measurement reporting parameters.

Optionally, the WLAN measurement configuration parameters include at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report includes a WLAN available admission capacity;
whether a measurement report includes a WLAN backhaul uplink and/or downlink bandwidth;
whether a measurement report includes a WLAN band;
whether a measurement report includes WLAN carrier information;
whether a measurement report includes WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

Optionally, the WLAN measurement reporting parameters include at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization; or
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

Optionally, the SL and WLAN interworking apparatus further includes at least one of the following:
a fourth indication module, configured to instruct the remote terminal to start WLAN measurement;
a first configuration module, configured to configure a first threshold to the remote terminal, where a first threshold is used by the remote terminal to determine whether signal quality of a Uu interface meets a WLAN measurement condition;
a second configuration module, configured to configure a first preset location for the remote terminal, where the first preset location is used by the remote terminal to determine whether a location at which the remote terminal is located meets a WLAN measurement condition; or
a third configuration module, configured to configure a second threshold to the remote terminal, where the second threshold is used by the remote terminal to determine whether signal quality of a PC5 interface meets a WLAN measurement condition.

Optionally, the SL and WLAN interworking apparatus is a relay terminal; and a fourth indication module is configured to instruct the remote terminal to start the WLAN measurement in a case that the signal quality of the PC5 interface with the remote terminal is less than or equal to a third threshold, and/or the relay terminal is located at a second preset location.

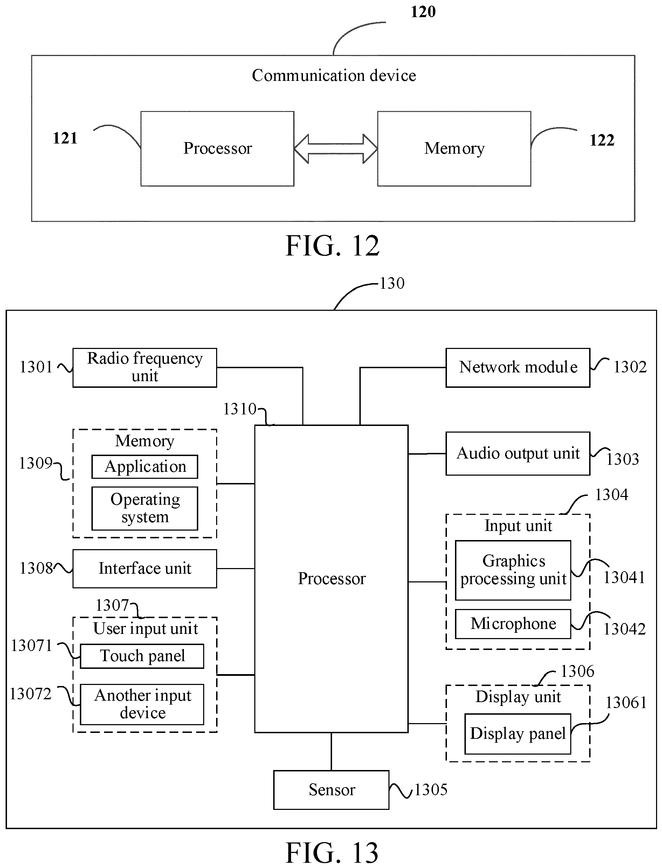

As shown in FIG. 12, this embodiment of this application further provides a communication device 120, including a processor 121, a memory 122, and a program or an instruction stored in the memory 122 and executable on the processor 121. For example, when the communication device 120 is a terminal, the program or instruction is executed by the processor 121 to implement various processes of the SL and WLAN interworking method embodiments shown in FIG. 6 to FIG. 8 or FIG. 9, and may implement the same technical effect. When the communication device 120 is a network-side device, the program or instruction is executed by the processor 121 to implement various processes of the SL and WLAN interworking method embodiment shown in FIG. 9, and may implement the same technical effect, which will not be described in detail herein again to avoid repetition.

FIG. 13 is a schematic diagram of a hardware structure of a terminal according to an embodiment of this application. The terminal 130 includes, but is not limited to, components such as a radio frequency unit 131, a network module 132, an audio output unit 133, an input unit 134, a sensor 135, a display unit 136, a user input unit 137, an interface unit 138, a memory 139, and a processor 1310.

A person skilled in the art may understand that the terminal 130 may further include the power supply (such as a battery) for supplying power to the components. The power supply may be logically connected to the processor 1310 by a power management system, thereby implementing functions such as charging, discharging, and power consumption management by using the power management system. A terminal structure shown in FIG. 13 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 134 may include a graphics processing unit (Graphics Processing Unit, GPU) 1341 and a microphone 1342. The graphics processing unit 1341 performs processing on image data of a static picture or a video that is obtained by an image acquisition apparatus (for example, a camera) in a video acquisition mode or an image acquisition mode. The display unit 136 may include a display panel 1361, and the display panel 1361 may be configured by using a liquid crystal display, an organic light-emitting diode, or the like. The user input unit 137 includes a touch panel 1371 and another input device 1372. The touch panel 1371 is also referred to as a touchscreen. The touch panel 1371 may include two parts: a touch detection apparatus and a touch controller. The another input device 1372 may include, but not limited to, a physical keyboard, a functional key (such as a volume control key or a switch key), a track ball, a mouse, and a joystick, which are not described herein in detail.

In this embodiment of this application, the radio frequency unit 131 receives downlink data from a network-side device and transmits the downlink data to the processor 1310 for processing; and transmits uplink data to the network-side device. Generally, the radio frequency unit 131 includes, but is not limited to, an antenna, at least one amplifier, a transceiver, a coupler, a low noise amplifier, a duplexer, and the like.

The memory 139 may be configured to store a software program or an instruction and various data. The memory 139 may mainly include a program or an instruction storage area and a data storage area. The program or instruction storage area may store an operating system, an application program or instruction required by at least one function (such as a sound playback function and an image display function), and the like. In addition, the memory 139 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. Such as at least one magnetic disk storage device, a flash memory device, or other non-volatile solid-state storage devices.

The processor 1310 may include one or more processing units; and optionally, the processor 1310 may integrate an application processor and a modem processor. The application processor mainly processes an operating system, a user interface, an application program or instruction, and the like. The modem processor mainly processes wireless communication, such as a baseband processor. It may be understood that the foregoing modem processor may either not be integrated into the processor 1310.

The processor 1310 is configured to perform WLAN measurement according to WLAN measurement configuration information to obtain a WLAN measurement report in a case that a WLAN measurement condition is met; and
the radio frequency unit 131 is configured to report the WLAN measurement report to a base station and/or a relay terminal.

In this embodiment of this application, the remote terminal in the sidelink may perform the WLAN measurement and transmit to the base station and/or relay terminal when the WLAN measurement condition is met, which may cause the relay terminal and remote terminal in the sidelink to better perform an interworking transmission operation by using unlicensed spectrum WLAN and SL. In this way, the service rate of the user is improved, QoS of a UE service is ensured, and system efficiency and utilization of a network spectrum are ensured while improving the user experience.

Optionally, the WLAN measurement condition includes at least one of the following:
signal quality of a Uu interface between the remote terminal and the the base station is less than or equal to a first threshold;
signal quality of a PC5 interface between the remote terminal and the the relay terminal is less than or equal to a second threshold;
the remote terminal is located at a first preset location;
the base station instructs the remote terminal to start the WLAN measurement;
the base station instructs the remote terminal to start the WLAN measurement through the relay terminal; or
the relay terminal instructs the remote terminal to start the WLAN measurement.

Optionally, the first threshold is configured by the base station or the remote terminal.

Optionally, the second threshold is configured by the base station, the relay terminal, or the remote terminal.

Optionally, the first preset location is configured by the base station, the relay terminal, or the remote terminal.

Optionally, the radio frequency unit 131 is further configured to receive the WLAN measurement configuration information transmitted by the base station or the relay terminal.

Optionally, the WLAN measurement configuration information includes at least one of the following:
WLAN measurement configuration parameters; or
WLAN measurement reporting parameters.

Optionally, the WLAN measurement configuration parameters include at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report includes a WLAN available admission capacity;
whether a measurement report includes a WLAN backhaul uplink and/or downlink bandwidth;
whether a measurement report includes a WLAN band;
whether a measurement report includes WLAN carrier information;
whether a measurement report includes WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

Optionally, the WLAN measurement reporting parameters include at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization; or
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

Optionally, the radio frequency unit 131 is further configured to receive SL and WLAN interworking configuration information transmitted by the base station and/or the relay terminal; and
the processor 1310 is configured to perform service data transmission according to the SL and WLAN interworking configuration information.

Optionally, the SL and WLAN interworking configuration information includes at least one of SL and WLAN interworking configuration information configured by the base station or SL and WLAN interworking configuration information configured by the relay terminal.

Optionally, the SL and WLAN interworking configuration information configured by the base station includes at least one of the following:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

Optionally, the SL and WLAN interworking configuration information configured by the relay terminal includes at least one of the following:
configuration information of a WLAN data radio bearer;
configuration information of a QoS flow mapped to a WLAN data radio bearer; or
configuration information of a WLAN offloading or replication duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

Alternatively, in some other embodiments, the radio frequency unit 131 is configured to receive the WLAN measurement report reported by the remote terminal in the sidelink; and transmit SL and WLAN interworking configuration information in a case that the WLAN measurement report indicates that an SL and WLAN interworking condition is met.

Optionally, the method further includes at least one of the following:
the processor 1310, configured to instruct a base station to transfer an entire or partial service of a relay terminal from a Uu link to a WLAN link;
the processor 1310, configured to transfer an entire or partial service of the remote terminal from a PC5 link to a WLAN link;
the processor 1310, configured to instruct the remote terminal to transfer an entire or partial service from a PC5 link to a WLAN link;
the processor 1310, configured to release a PC5 link with the remote terminal; or
the radio frequency unit 131, configured to transmit a request for establishing an SL and WLAN dual connectivity for the remote terminal to a WLAN node.

Optionally, the radio frequency unit 131 is further configured to transmit WLAN measurement configuration information to the remote terminal.

Optionally, the WLAN measurement configuration information includes at least one of the following:
WLAN measurement configuration parameters; or
WLAN measurement reporting parameters.

Optionally, the WLAN measurement configuration parameters include at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report includes a WLAN available admission capacity;
whether a measurement report includes a WLAN backhaul uplink and/or downlink bandwidth;
whether a measurement report includes a WLAN band;
whether a measurement report includes WLAN carrier information;
whether a measurement report includes WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

Optionally, the WLAN measurement reporting parameters include at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization; or
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

Optionally, the method further includes at least one of the following:
the processor 1310, further configured to instruct the remote terminal to start the WLAN measurement;
the processor 1310, further configured to configure a first threshold to the remote terminal, where a first threshold is used by the remote terminal to determine whether signal quality of a Uu interface meets a WLAN measurement condition;
the processor 1310, further configured to configure a first preset location for the remote terminal, where the first preset location is used by the remote terminal to determine whether a location at which the remote terminal is located meets a WLAN measurement condition; or
the processor 1310, further configured to configure a second threshold to the remote terminal, where the second threshold is used by the remote terminal to determine whether signal quality of a PC5 interface meets a WLAN measurement condition.

Optionally, the processor 1310 is further configured to instruct the remote terminal to start the WLAN measurement in a case that the signal quality of the PC5 interface with the remote terminal is less than or equal to a third threshold, and/or the relay terminal is located at a second preset location.

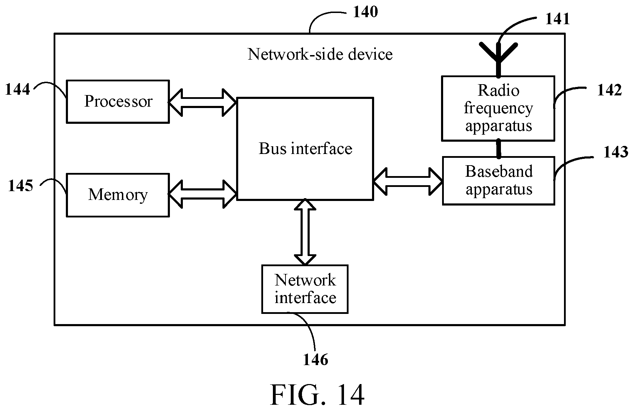

This embodiment of this application further provides a base station. As shown in FIG. 14, the base station 140 includes: an antenna 141, a radio frequency apparatus 142, and a baseband apparatus 143. The antenna 141 is connected to the radio frequency apparatus 142. In an uplink direction, the radio frequency apparatus 142 receives information through the antenna 141, and transmits the received information to the baseband apparatus 143 for processing. In a downlink direction, the baseband apparatus 143 performs processing on the to-be-transmitted information, and transmits the to-be-transmitted information to the radio frequency apparatus 142. After performing processing on the received information, the radio frequency apparatus 142 transmits the received information out through the antenna 141.

The band processing apparatus may be located in the baseband apparatus 143, and the method performed by the network-side device in the foregoing embodiments may be implemented in the baseband apparatus 143. The baseband apparatus 143 includes a processor 144 and a memory 145.

The baseband apparatus 143 may include, for example, at least one baseband board, and a plurality of chips are arranged on the baseband board. As shown in FIG. 14, for example, one of the chips is a processor 144, and is connected to the memory 145, to invoke the program in the memory 145, and to perform the network device operation shown in the foregoing method embodiments.

The baseband apparatus 143 may further include a network interface 146 used for exchanging information with the radio frequency apparatus 142. For example, the interface is a common public radio interface (common public radio interface, CPRI).

Specifically, the network-side device of this embodiment of this application further includes: an instruction or a program stored in the memory 145 and executable on the processor 144. The processor 144 invokes the instruction or program in the memory 145 to perform the method performed by each module shown in FIG. 11, and implements the same technical effect, which will not be described in detail herein again to avoid repetition.

This embodiment of this application further provides a readable storage medium, storing therein a program or an instruction, where the program or instruction, when executed by a processor, implements various processes of the SL and WLAN interworking method embodiment, and may implement the same technical effects, which will not be described in detail herein again to avoid repetition.

The processor is a processor in the terminal described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc, or the like.

This embodiment of this application further provides a chip, including a processor and a communication interface, where the communication interface is coupled to the processor. The processor is configured to run a program or an instruction on a network-side device to implement various processes of the SL and WLAN interworking method embodiment, and may implement the same technical effects, which will not be described in detail herein again to avoid repetition.

It should be understood that, the chip mentioned in this embodiment of this application may further be referred to as a system-level chip, a system chip, a chip system, a system on chip, or the like.

This embodiment of this application further provides a program product, being stored in a non-volatile memory, where the program product, when executed by at least one processor, implements various processes of the SL and WLAN interworking method embodiment, and may implement the same technical effects, which will not be described in detail herein again to avoid repetition.

It is to be noted that, the term " include", "comprise", or any other variation thereof in this specification intends to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A sidelink SL and wireless local area network WLAN interworking method, applied to a remote terminal in a sidelink, and the method comprising:
performing, in a case that a WLAN measurement condition is met, WLAN measurement according to WLAN measurement configuration information to obtain a WLAN measurement report; and
reporting the WLAN measurement report to a base station and/or a relay terminal.

2. The method according to claim 1, wherein the WLAN measurement condition comprises at least one of the following:
signal quality of a Uu interface between the remote terminal and the base station is less than or equal to a first threshold;
signal quality of a PC5 interface between the remote terminal and the the relay terminal is less than or equal to a second threshold;
the remote terminal is located at a first preset location;
the base station instructs the remote terminal to start the WLAN measurement;
the base station instructs the remote terminal to start the WLAN measurement through the relay terminal; or
the relay terminal instructs the remote terminal to start the WLAN measurement.

3. The method according to claim 1, further comprising:
receiving the WLAN measurement configuration information transmitted by the base station or the relay terminal.

4. The method according to claim 1 or 3, wherein the WLAN measurement configuration information comprises at least one of the following:
WLAN measurement configuration parameters; or
WLAN measurement reporting parameters.

5. The method according to claim 4, wherein the WLAN measurement configuration parameters comprise at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report comprises a WLAN available admission capacity;
whether a measurement report comprises a WLAN backhaul uplink and/or downlink bandwidth;
whether a measurement report comprises a WLAN band;
whether a measurement report comprises WLAN carrier information;
whether a measurement report comprises WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

6. The method according to claim 4, wherein the WLAN measurement reporting parameters comprise at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization;
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

7. The method according to claim 1, wherein after the reporting the WLAN measurement report to a base station and/or a relay terminal, the method further comprises:
receiving SL and WLAN interworking configuration information transmitted by the base station and/or the relay terminal; and
performing service data transmission according to the SL and WLAN interworking configuration information.

8. The method according to claim 7, wherein the SL and WLAN interworking configuration information comprises at least one of SL and WLAN interworking configuration information configured by the base station or SL and WLAN interworking configuration information configured by the relay terminal.

9. The method according to claim 8, wherein the SL and WLAN interworking configuration information configured by the base station comprises at least one of the following:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

10. The method according to claim 8, wherein the SL and WLAN interworking configuration information configured by the relay terminal comprises at least one of the following:
configuration information of a WLAN data radio bearer;
configuration information of a QoS flow mapped to a WLAN data radio bearer;
configuration information of a WLAN offloading or replication duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

11. An SL and WLAN interworking method, applied to a communication device, and the method comprising:
receiving a WLAN measurement report reported by a remote terminal in a sidelink; and
transmitting SL and WLAN interworking configuration information in a case that the WLAN measurement report indicates that an SL and WLAN interworking condition is met.

12. The method according to claim 11, wherein the communication device is a base station; and the receiving a WLAN measurement report reported by a remote terminal in a sidelink comprises:
receiving the WLAN measurement report reported by the remote terminal through a Uu interface;
or
receiving the WLAN measurement report reported by the remote terminal through a relay terminal.

13. The method according to claim 11, wherein the communication device is a base station; and the transmitting SL and WLAN interworking configuration information comprises:
transmitting the SL and WLAN interworking configuration information to a relay terminal and/or the remote terminal;
or
transmitting the SL and WLAN interworking configuration information through broadcast.

14. The method according to claim 13, wherein the transmitting the SL and WLAN interworking configuration information to a relay terminal and/or the remote terminal comprises:
transmitting the SL and WLAN interworking configuration information to the relay terminal through a Uu interface, and forwarding, by the relay terminal, the SL and WLAN interworking configuration information to the remote terminal through a PC5 interface.

15. The method according to claim 13, wherein the SL and WLAN interworking configuration information comprises:
supporting an SL and WLAN aggregation operation;
service features capable of performing WLAN transmission;
service quality of service QoS flow information capable of performing WLAN transmission;
service data radio bearer DRB information capable of performing WLAN transmission;
a configuration of a protocol stack layer corresponding to a service capable of performing WLAN transmission;
service features capable of performing WLAN offloading or replication, delivery, and transmission;
service QoS flow information capable of performing WLAN offloading or replication, delivery, and transmission;
service DRB information capable of performing WLAN offloading or replication, delivery, and transmission;
a configuration of a protocol stack layer corresponding to a service capable of performing WLAN offloading or replication, delivery, and transmission;
service features performing SL transmission;
service QoS flow information performing SL transmission;
service DRB information performing SL transmission;
a configuration of a protocol stack layer corresponding to a service performing SL transmission; or
interface or port information of WLAN data transmission.

16. The method according to claim 15, wherein the SL and WLAN interworking configuration information transmitted to the relay terminal further comprises:
node interactive parameters of an SL node and a WLAN node.

17. The method according to claim 16, wherein the node interactive parameters of the SL node and the WLAN node comprise at least one of the following:
a BSSID;
a WLAN operating class;
a WLAN country code;
a WLAN maximum admission capacity;
WLAN band information;
a WLAN channel number;
an SSID;
an HESSID;
WLAN usage;
WAN indicator information;
WLAN channel utilization; or
terminal identity information.

18. The method according to claim 11, wherein the communication device is a base station; and the method further comprises at least one of the following:
transferring an entire or partial service of a relay terminal from a Uu link to a WLAN link;
instructing a relay terminal to transfer an entire or partial service from a Uu link to a WLAN link;
releasing a Uu link with a relay terminal; or
transmitting a request for establishing a Uu and WLAN dual connectivity for a relay terminal to a WLAN node.

19. The method according to claim 11, wherein the communication device is a relay terminal, and the SL and WLAN interworking configuration information comprises at least one of the following:
configuration information of a WLAN data radio bearer;
configuration information of a QoS flow mapped to a WLAN data radio bearer; or
configuration information of a WLAN offloading or duplication data radio bearer;
configuration information of a QoS flow mapped to a WLAN offloading data radio bearer;
configuration information of a WLAN interface or port;
configuration information of an SL data radio bearer;
configuration information of a QoS flow mapped to an SL data radio bearer; or
WLAN MAC address information related to interworking between an SL and a WLAN.

20. The method according to claim 11, wherein the communication device is a relay terminal, and the method further comprises at least one of the following:
instructing a base station to transfer an entire or partial service of the relay terminal from a Uu link to a WLAN link;
transferring an entire or partial service of the remote terminal from a PC5 link to a WLAN link;
instructing the remote terminal to transfer an entire or partial service from a PC5 link to a WLAN link;
releasing a PC5 link with the remote terminal; or
transmitting a request for establishing an SL and WLAN dual connectivity for the remote terminal to a WLAN node.

21. The method according to claim 11, wherein before the receiving a WLAN measurement report reported by a remote terminal in a sidelink, the method further comprises:
transmitting WLAN measurement configuration information to the remote terminal.

22. The method according to claim 21, wherein the WLAN measurement configuration information comprises at least one of the following:
WLAN measurement configuration parameters; or
WLAN measurement reporting parameters.

23. The method according to claim 22, wherein the WLAN measurement configuration parameters comprise at least one of the following:
a WLAN band indicator list;
a WLAN carrier information list;
a WLAN identifier list that needs to be added to a measurement configuration;
a WLAN identifier list that needs to be removed from a measurement configuration;
whether a measurement report comprises a WLAN available admission capacity;
whether a measurement report comprises a WLAN backhaul uplink and/or downlink bandwidth;
whether a measurement report comprises a WLAN band;
whether a measurement report comprises WLAN carrier information;
whether a measurement report comprises WLAN channel utilization;
an event ID that triggers the WLAN measurement;
a maximum number of cells in a measurement report;
a configuration of a measurement report of a WLAN received signal strength indication RSSI;
reporting any WLAN access point that meets an interworking trigger request;
WLAN carrier information;
a WLAN channel number;
a WLAN country code;
a WLAN operating class;
a WLAN name; or
an event that triggers the WLAN measurement.

24. The method according to claim 22, wherein the WLAN measurement reporting parameters comprise at least one of the following:
a WLAN available admission capacity;
a WLAN backhaul downlink bandwidth;
a WLAN backhaul uplink bandwidth;
WLAN carrier information;
WLAN channel occupancy information;
WLAN channel utilization; or
indication information used for indicating whether the remote terminal is connected to a WLAN to which a measurement result is applicable;
a WLAN measurement result list;
a WLAN RSSI measurement result;
a total number of stations associated with a WLAN;
a WLAN identifier; or
WLAN round trip time RTT information.

25. The method according to claim 11, further comprising at least one of the following:
instructing the remote terminal to start WLAN measurement;
configuring a first threshold for the remote terminal, wherein a first threshold is used by the remote terminal to determine whether signal quality of a Uu interface meets a WLAN measurement condition;
configuring a first preset location for the remote terminal, wherein the first preset location is used by the remote terminal to determine whether a location at which the remote terminal is located meets a WLAN measurement condition; or
configuring a second threshold for the remote terminal, wherein the second threshold is used by the remote terminal to determine whether signal quality of a PC 5 interface meets a WLAN measurement condition.

26. The method according to claim 25, wherein the communication device is a relay terminal; and the instructing the remote terminal to start WLAN measurement comprises:
instructing the remote terminal to start the WLAN measurement in a case that the signal quality of the PC5 interface with the remote terminal is less than or equal to a third threshold, and/or the relay terminal is located at a second preset location.

27. An SL and WLAN interworking apparatus, comprising:
a measurement module, configured to perform WLAN measurement according to WLAN measurement configuration information to obtain a WLAN measurement report in a case that a WLAN measurement condition is met; and
a reporting module, configured to report the WLAN measurement report to a base station and/or a relay terminal.

28. The apparatus according to claim 27, wherein the WLAN measurement condition comprises at least one of the following:
signal quality of a Uu interface between the remote terminal and the the base station is less than or equal to a first threshold;
signal quality of a PC5 interface between the remote terminal and the the relay terminal is less than or equal to a second threshold;
a remote terminal is located at a first preset location;
the base station instructs the remote terminal to start the WLAN measurement;
the base station instructs the remote terminal to start the WLAN measurement through the relay terminal; or
the relay terminal instructs the remote terminal to start the WLAN measurement.

29. The apparatus according to claim 27, further comprising:
a first receiving module, configured to receive the WLAN measurement configuration information transmitted by the base station or the relay terminal.

30. The apparatus according to claim 27, further comprising:
a second receiving module, configured to receive SL and WLAN interworking configuration information transmitted by the base station and/or the relay terminal; and
a transmission module, configured to perform service data transmission according to the SL and WLAN interworking configuration information.

31. An SL and WLAN interworking apparatus, comprising:
a receiving module, configured to receive a WLAN measurement report reported by a remote terminal in a sidelink; and
a first transmitting module, configured to transmit SL and WLAN interworking configuration information in a case that the WLAN measurement report indicates that an SL and WLAN interworking condition is met.

32. The apparatus according to claim 31, wherein the SL and WLAN interworking apparatus is a base station, and further comprises at least one of the following:
a first transfer module, configured to transfer an entire or partial service of a relay terminal from a Uu link to a WLAN link;
a first indication module, configured to instruct a relay terminal to transfer an entire or partial service from a Uu link to a WLAN link;
a first release module, configured to release a Uu link with a relay terminal; or
a second transmitting module, configured to transmit a request for establishing a Uu and WLAN dual connectivity for a relay terminal to a WLAN node.

33. The apparatus according to claim 31, wherein the SL and WLAN interworking apparatus is a relay terminal, and further comprises at least one of the following:
a second indication module, configured to instruct a base station to transfer an entire or partial service of the relay terminal from a Uu link to a WLAN link;
a second transfer module, configured to transfer an entire or partial service of the remote terminal from a PC5 link to a WLAN link;
a third indication module, configured to instruct the remote terminal to transfer an entire or partial service from a PC5 link to a WLAN link;
a second release module, configured to release a PC5 link with the remote terminal; or
a third transmitting module, configured to transmit a request for establishing an SL and WLAN dual connectivity for the remote terminal to a WLAN node.

34. The apparatus according to claim 31, further comprising:
a fourth transmitting module, configured to transmit WLAN measurement configuration information to the remote terminal.

35. The apparatus according to claim 31, further comprising at least one of the following:
a fourth indication module, configured to instruct the remote terminal to start WLAN measurement;
a first configuration module, configured to configure a first threshold to the remote terminal, wherein a first threshold is used by the remote terminal to determine whether signal quality of a Uu interface meets a WLAN measurement condition;
a second configuration module, configured to configure a first preset location for the remote terminal, wherein the first preset location is used by the remote terminal to determine whether a location at which the remote terminal is located meets a WLAN measurement condition; or
a third configuration module, configured to configure a second threshold to the remote terminal, wherein the second threshold is used by the remote terminal to determine whether signal quality of a PC5 interface meets a WLAN measurement condition.

36. A terminal, comprising a processor, a memory, and a program or an instruction stored in the memory and executable on the processor, wherein the program or instruction, when executed by the processor, implements the steps of the method according to any one of claims 1 to 10.

37. A communication device, comprising a processor, a memory, and a program or an instruction stored in the memory and executable on the processor, wherein the program or instruction, when executed by the processor, implements the steps of the method according to any one of claims 11 to 26.

38. A readable storage medium, storing a program or an instruction, wherein the program or instruction, when executed by a processor, implements the method according to any one of claims 1 to 10, or implements the steps of the method according to any one of claims 11 to 26.
